(19) Europäisches Patentamt
European Patent Office
Office européen des brevets

(11) Numéro de publication: **0 013 846**
**B1**

(12) **FASCICULE DE BREVET EUROPEEN**

(45) Date de publication du fascicule du brevet: **25.05.83**

(51) Int. Cl.³: **F 02 P 7/06**

(21) Numéro de dépôt: **79400967.0**

(22) Date de dépôt: **05.12.79**

# (54) Procédé et dispositif de repérage de la position angulaire d'une pièce animée d'un mouvement de rotation.

(30) Priorité: **09.01.79 FR 7900386**

(43) Date de publication de la demande:
**06.08.80 Bulletin 80/16**

(45) Mention de la délivrance du brevet:
**25.05.83 Bulletin 83/21**

(84) Etats contractants désignés:
**AT DE GB IT NL SE**

(56) Documents cités:
**FR - A - 2 251 941**
**FR - A - 2 280 801**
**FR - A - 2 410 826**
**US - A - 3 725 794**
**US - A - 3 745 364**

(73) Titulaire: **REGIE NATIONALE DES USINES RENAULT**
**Boîte postale 103 8-10 avenue Emile Zola**
**F-92109 Boulogne-Billancourt (FR)**

(72) Inventeur: **Deleris, Robert**
**36, Square des Marronniers**
**F-78870 Bailly (FR)**

(74) Mandataire: **Jacques, Max et al,**
**RNUR - S. 0804 BP 103**
**F-92109 Boulogne Billancourt (FR)**

**EP 0 013 846 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

# Procédé dispositif de repérage de la position angulaire d'une pièce animée d'un mouvement de rotation

La présente invention est relative aux systèmes de repérage de la position angulaire de pièces en mouvement rotatif au moyen d'un objet, lié à la pièce en mouvement, présentant des discontinuités de forme ou de matière et au moyen d'un capteur unique pour fournir des signaux réguliers quand l'arbre se trouve dans des positions angulaires déterminées et pour former un signal de référence.

En automobile, par exemple, on utilise un émetteur d'impulsions qui fournit un signal chaque fois que le vilebrequin est dans une position déterminée, par exemple au point mort haut ou au bas du cycle moteur relativement à un ou plusieurs cylindres, et une série d'impulsions pour déterminer exactement la position angulaire du vilebrequin. Pour générer ces deux types de signaux, on place généralement à côté d'un disque denté, pourvu d'un nombre de dents élevé, un autre disque portant une dent aux points de référence. Cette opération est onéreuse et délicate à mettre en oeuvre, d'une part, à cause de l'encombrement du dispositif, du nombre de cibles et des capteurs, d'autre part, à cause de la difficulté d'obtenir des signaux synchrones après un calage minutieux des deux cibles.

On a essayé d'éviter ces inconvénients au moyen d'un capteur unique en supprimant une dent de la cible, comme décrit dans le FR—A—2 410 826 ou en rajoutant localement une dent comme décrit dans le FR—A—2 251 941 et en détectant la discontinuité ainsi produite de façon à produire une impulsion de repérage au passage de la première dent après la discontinuité.

Néanmoins, ces systèmes présentent plusieurs inconvénients: d'une part, ils nécessitent un train d'impulsions ayant un rapport cyclique de un entre la largeur de la dent et l'entredent, ce qui est difficile à obtenir dans les cas concrets où souvent la cible présente un léger faux rond ou bien dans le cas des démarrages à froid des moteurs à explosion durant lesquels on remarque de très grandes variations de vitesse instantanée de l'ordre de 1 à 10 sur un demi-tour mettant en défaut tous les systèmes actuellement utilisés. De plus, l'emplacement des discontinuités aux points morts, comme il est souvent décrit, présente des inconvénients dans les phases de démarrage car la dérivée de la vitesse angulaire s'annule et change de signe au moment du passage de la discontinuité. Reste la possibilité de déplacer la discontinuité dans un endroit plus propice à sa détection mais alors on n'a plus d'information relative au passage des points morts.

La présente invention permet d'éviter ces inconvénients.

La présente invention, relative à un procédé de décodage utilisant une technique numérique donc particulièrement adaptée à l'utilisation en circuit intégré à grande échelle, est un perfectionnement aux systèmes de repérage de position n'utilisant qu'un seul capteur et la suppression de dents sur la cible de base leur permettant de fonctionner avec des rapports cycliques quelconques et permettant de démarrer par grands froids les moteurs thermiques à explosion sans mettre en défaut le système de détection. L'arbre tournant est muni d'un disque comportant des dents régulièrement espacées et dont une au moins a été supprimée à une position privilégiée afin de créer un repère absolu.

En regard du disque est placé un capteur de position détectant le passage des dents; ce capteur ainsi que l'électronique de traitement du signal peuvent être d'un type quelconque, à savoir par exemple: opto-électronique, magnétique, à courant porteur haute fréquence, à effet hall ou d'une autre façon analogue connue. Le nombre de dents du disque peut être quelconque mais plus grand est ce nombre, plus grande est la précision avec laquelle est déterminée la position de l'arbre tournant dans le cas de vitesses variables. Malheureusement, les problèmes technologiques liés à l'obtention d'une cible à grand nombre de dents ainsi qu'à la sensibilité de détection des capteurs limitent généralement ce nombre à une valeur inférieure compatible avec la précision requise. Le procédé de décodage, suivant la présente invention, permet au moyen d'un seul capteur de reconstituer le signal de repérage angulaire avec une erreur relativement faible ainsi qu'un signal d'interpolation permettant d'avoir une résolution de la cible compatible avec la demande.

Suivant l'invention, le problème posé est résolu au moyen d'un procédé de repérage de la position angulaire d'une pièce animée d'un mouvement de rotation, solidaire d'un disque muni à sa périphérie d'une succession de dents et de creux et duquel on a supprimé au moins une dent pour constituer un repère absolu, comportant un capteur de position disposé face à la périphérie du disque pour détecteur le défilement des dents et des creux, suivant lequel on réalise une interpolation électronique du signal d'entrée en provenance du capteur de position et on utilise le signal d'interpolation pour engendrer un signal de référence en réponse à la détection du repère absolu par le capteur, caractérisé en ce que l'on place le repère absolu à la périphérie du disque dans une position telle qu'il est détecté par le capteur pendant une phase de variation monotone ou de vitesse constante du disque, on utilise le signal d'interpolation pour comparer des périodes successives définies chacune par le défilement devant le capteur des fronts montants de deux dents consécutives, on engendre ledit signal de référence lorsque le rapport entre deux périodes successives est supérieur à un seuil donné, et on engendre au moins un signal de répérage de position particulière du disque déphasé angulairement d'une valeur donnée par rapport au signal de référence, un verrouillage électronique étant effectué sur le signal de référence pour éliminer toute impulsion parasite sur le signal de repérage entre deux détections consécutives du repère absolu.

L'invention a également pour objet un dispositif pour la mise en oeuvre du procédé défini ci-dessus, comportant des moyens pour réaliser une interpolation électronique du signal d'entrée en provenance du capteur de position, caractérisé en ce qu'il comporte des moyens de comptage du nombre d'impulsions d'interpolation engendrées entre les fronts montants de deux dents consécutives, des moyens de comparaison à un seuil du nombre d'impulsions d'interpolation comptabilisées entre les fronts montants de deux dents consécutives, des moyens de verrouillage pour éliminer toute impulsion parasite sur le signal de repérage entre deux détections consécutives du repère absolu, et des moyens pour engendrer ledit signal de repérage à partir du signal de référence et d'un signal image du signal d'entrée mis en forme.

Suivant une première caractéristique, l'invention concerne un dispositif dans lequel les moyens pour réaliser une interpolation électronique du signal d'entrée comprennent: un compteur-réservoir accumulant les impulsions fournies par une horloge travaillant à une fréquence F, une mémoire vive connecté par ses entrées aux sorties dudit compteur-réservoir et par ses sorties aux entrées d'un décompteur connecté par ses sorties aux entrées d'un détecteur d'état relié par une de ses sorties à une entrée de chargement dudit décompteur, dans lequel ledit décompteur travaille à une fréquence nF avec *n* entier et positif et se charge à la valeur en mémoire dans la mémoire vive à chaque fois que son contenu atteint une valeur programmée, caractérisé en ce que les moyens de comptage du nombre d'impulsions d'interpolation, entre les fronts montants de deux dents consécutives, comprennent un compteur-decodeur connecté par une entrée à la sortie du détecteur d'état et par une sortie à une bascule du type RS mémorisant un décodage dudit compteur-décodeur jusqu'à sa prochaine remise à zéro.

Suivant une autre caractéristique, les moyens pour réaliser une interpolation électronique du signal d'entrée comprennent, en outre, une logique de commande engendrant, à partir du signal d'entrée en provenance du capteur de position: un signal d'inhibition de l'horloge, un signal de transfert pour le chargement de la mémoire vive par l'intermédiaire d'une logique de chargement et un signal de remise à zéro commun au compteur-réservoir, au compteur-décodeur et à la bascule de type RS.

Suivant une autre caractéristique de réalisation, les moyens pour engendrer le signal de repérage comprennent un compteur de discontinuités connecté par ses entrées à deux sorties des dits moyens de verrouillage lui fournissant respectivement un signal de remise à zéro et un signal d'incrémentation, et par ses sorties aux entrées d'un décodeur d'état qui est connecté par une de ses sorties à une entrée des moyens de verrouillage et par au moins une autre sortie à au moins une porte engendrant à sa sortie le dit signal de repérage.

Suivant une autre caractéristique de réalisation, les moyens de verrouillage comprennent des moyens favorisant la remise à zéro du compteur de discontinuités lorsque le comptage des dents, précédant la remise à zéro du dit compteur, n'a pas donné un nombre égal à celui séparant ordinairement deux discontinuités successives, des moyens pour entrer en action seulement lorsque le comptage des dents, séparant deux remises à zéro dudit compteur de discontinuités, a au moins une fois été égal à celui séparant ordinairement deux discontinuités successives et lorsque le dispositif de verrouillage est en action, des moyens pour restituer des impulsions correspondant aux dents absentes en vue de piloter d'autres dispositifs associés et des moyens bloquant la remise à zéro du compteur de discontinuités tant que le comptage des dents n'est pas au moins égal à celui séparant ordinairement deux discontinuités successives.

Suivant une autre caractéristique de réalisation, une porte logique à fonction ET connecte: par ses entrées, d'une part, la sortie de la logique de commande donnant le signal de transfert, d'autre part, la sortie non inverseuse de la bascule de type RS; par sa sortie, d'une part, une entrée de la logique de chargement, d'autre part, une entrée des moyens de verrouillage.

L'invention sera mieux comprise en regard de la description ci-après et des figures annexées qui représentent un exemple de réalisation de l'invention, figures dans lesquelles:

- la figure 1 représente un exemple de réalisation de la cible,
- la figure 2 illustre une courbe représentative de la vitesse du vilebrequin d'un moteur thermique à combustion interne dans sa phase de démarrage en fonction du temps,
- la figure 3 représente un exemple de réalisation du dispositif électronique suivant la présente invention,
- la figure 4 représente le chronogramme relatif à la logique de commande,
- la figure 5 représente le chronogramme relatif à la détection de l'absence de dents et la restitution des dents absentes,
- la figure 6 représente le chronogramme relatif au système de verrouillage et de restitution des positions particulières du cycle moteur,

— la figure 7 représente un exemple de réalisation de la logique de chargement intervenant dans la figure 3,

— la figure 8 représente un exemple de réalisation de la logique de verrouillage intervenant dans la figure 3,

— la figure 9 représente un exemple de réalisation du détecteur d'état 30 illustré à la figure 3.

Dans les différentes figures, les mêmes références numériques désignent les mêmes éléments.

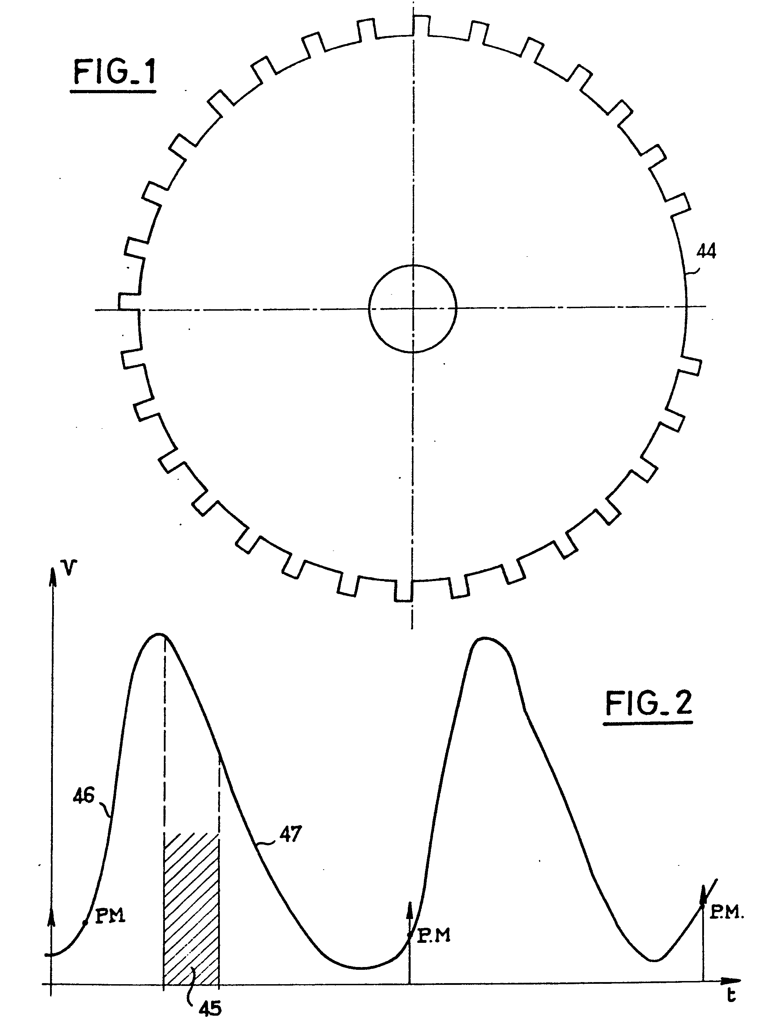

Un exemple de réalisation de la cible fixée sur l'arbre tournant dont on cherche à déterminer la position angulaire, tel qu'il est représenté en figure 1, nécessite un disque à la périphérie duquel sont rapportées N dents régulièrement espacées et de forme quelconque mais toutes identiques entre elles, faites d'un matériau compatible avec le choix du capteur de façon à créer des discontinuités de forme ou de matière suivant le mode de fixation des dents sur le disque ou à l'intérieur de celui-ci dont le matériau de réalisation peut être laissé au libre choix de l'homme de l'art.

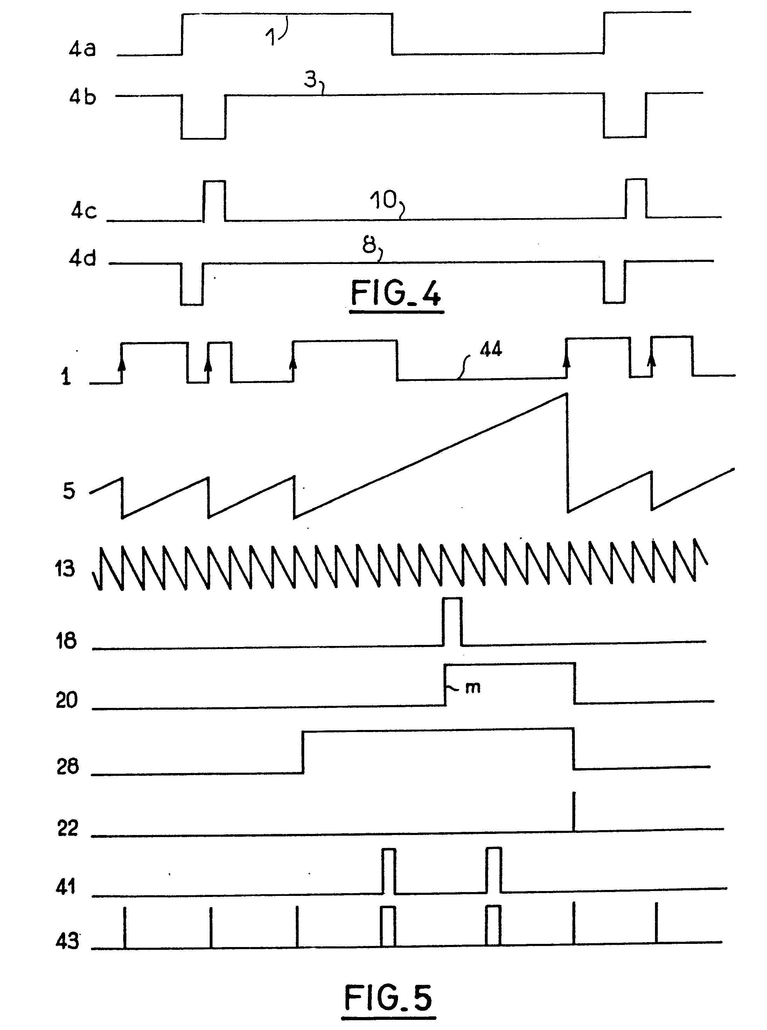

Les dents passant devant le capteur y induisent un signal électrique traité par une électronique adjointe délivrant un signal 1 tel qu'illustré ligne 1 dans les figures 4, 5 et 6, image électrique de la cible, et dont l'état logique est haut quand le capteur est en regard d'une dent. Pour obtenir un signal de référence dans une position privilégiée de l'arbre tournant, on a supprimé deux dents successives à la cible en 44, ce qui provoque un repère. Le positionnement angulaire de la discontinuité 44 ne doit pas être quelconque pour la bonne marche du système mais doit être le résultat d'une étude des vitesses angulaires instantanées de l'arbre tournant. Il est pris de préférence dans une zone 45, apparaissant sur la figure 2, à l'intérieur de laquelle la dérivée de la vitesse angulaire est constante et éventuellement où la vitesse est la plus élevée, c'est-à-dire dans une zone où le rapport

$$\frac{\frac{d\omega}{dt}}{\omega^2}$$

est le plus faible sur un nombre de dents le plus élevé, rapport dans lequel $\omega$ est la vitesse angulaire de rotation de la cible et du vilebrequin associés.

En effet, comme nous pouvons le voir en figure 2, la vitesse angulaire instantanée du vilebrequin d'un moteur thermique à combustion interne, dont nous nous proposons de repérer la position angulaire, n'est pas monotone en phase de démarrage mais présente successivement une phase d'accélération 46 correspondant à la détente des gaz brûlés dans le cylindre considéré et une phase de décélération 47 correspondant à la compression des gaz dans un autre cylindre en vue de la combustion suivante déclenchée par une étincelle électrique et une injection de carburant au moment opportun. Lorsque la phase de démarrage est terminée, la vitesse angulaire du vilebrequin devient plus élevée et les phases 46 et 47 disparaissent sous l'effet des forces d'inertie des masses en mouvement.

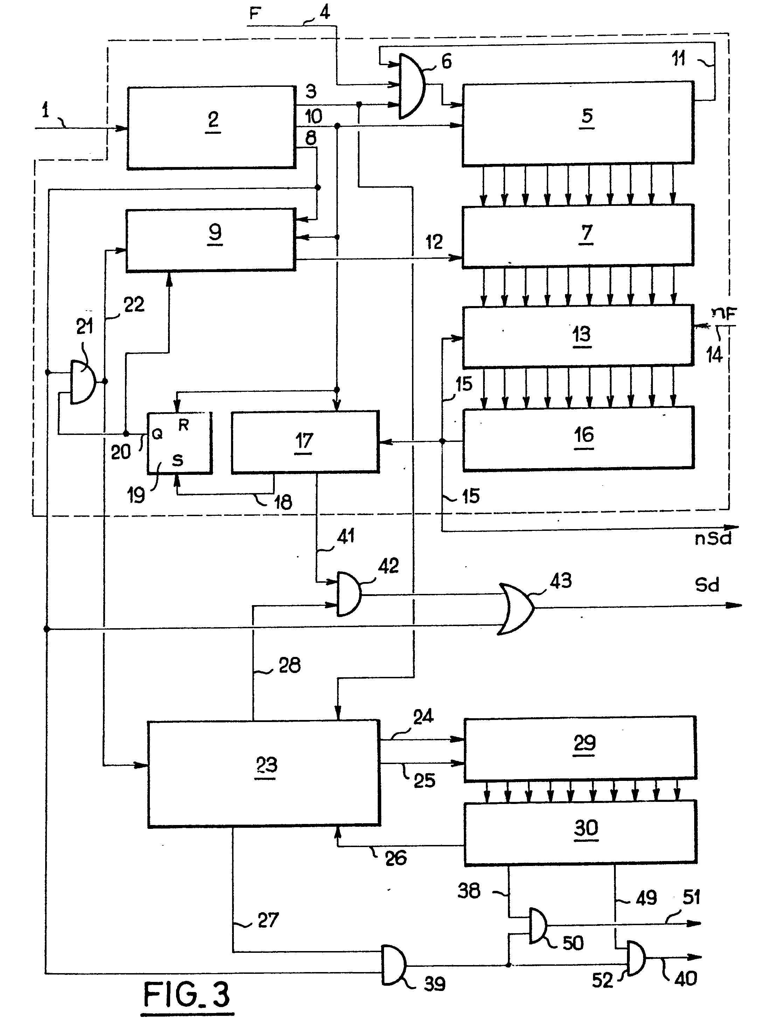

Le dispositif, illustré principalement à la figure 3 et aux figures 4, 5 et 6 pour le chronogramme des signaux, est destiné à créer un signal d'interpolation dont le rôle est de multiplier électroniquement le nombre des dents de la cible de façon à obtenir une résolution plus précise de la position angulaire de l'arbre tournant, à utiliser ce signal d'interpolation pour détecter le repère créé par l'absence de dents 44, à générer des signaux de repérage, par exemple les passages des cylindres à leurs points morts hauts respectifs, et à recréer les dents absentes de la cible comme en 44.

Pour la multiplication du nombre de dents, on utilise un procédé basé sur la division d'un espace de temps T représentant la période entre deux fronts montants successifs du signal d'entrée 1 en *n* parties égales au moyen d'un compteur chargé au rythme d'une horloge à la fréquence F et au moyen d'un décompteur bouclé sur lui-même se chargeant à la valeur F×T et se déchargeant au rythme d'une horloge de fréquence nF. Lors du fonctionnement normal, on a *n* impulsions de chargement du décompteur pendant la période T; lors de la suppression de *k* dents 44, cette période devient (k+1)T et on a (k+1)n impulsions de chargement qu'il suffit de compter pour générer un signal chaque fois que le nombre est supérieur à un nombre *m*.

Ce nombre *m* est compris entre *n* et (k+1)n et choisi de façon que la détection ne soit pas perturbée dans les phases d'accélération et de décélération. L'expérience montre qu'une valeur comprise entre

$$\frac{(k+2)n}{2}$$

et $n\sqrt{k+1}$ donne de bons résultats.

Suivant la figure 3 qui représente un mode de réalisation non limitatif de l'électronique associée au capteur de position, un signal 1 issu de l'électronique du capteur de position est appliqué à une logique de commande 2 délivrant à chaque transition montante du signal 1 trois types de signaux servant à piloter le dispositif: un signal 3 servant à inhiber le signal 4 d'une horloge travaillant à la fréquence F et chargeant un compteur-réservoir 5 au travers d'une porte logique ET 6, pendant le transfert du contenu du compteur-réservoir 5 dans une mémoire vive 7 et la remise à zéro du compteur 5; un signal de transfert 8, traité dans une logique de chargement 9 dont le fonctionnement sera décrit par la suite et un signal 10 de remise à zéro du compteur-réservoir 5 avant le déclenchement de la mesure de la période suivante. A la figure 4, on a représenté successivement:

- à la première ligne 4 a, le signal 1 engendré par le capteur de position,
- à la seconde ligne en 4 b, le signal 3 servant à inhiber le signal de l'horloge 4 par l'intermédiaire de la porte logique 6 à fonction ET,
- à la troisième ligne en 4 c, le signal 10 de remise à zéro du compteur-réservoir 5,
- à la quatrième ligne en 4 d, le signal 8 de transfert.

Revenant à la figure 3, les signaux 10 et 8 sont réalisés à l'intérieur de la logique de commande 2 à partir du signal 1 engendré par le capteur de position au moyen de deux monostables de constante de temps très faible dont l'un produisant le signal 8 est déclenché par le signal 1 et l'autre produisant le signal 10 par le signal 8; le signal 3 étant à niveau logique bas lorsque les monostables sont en fonctionnement, ces monostables peuvent être réalisés au moyen de portes logiques simples. Après l'opération de remise à zéro du compteur 5, les impulsions d'horloge 4 sont comptabilisées dans le compteur 5, dont la capacité est fonction de la fréquence F, de la dynamique en fréquence du signal 1 et de la précision désirée pour la mesure d'interpolation pendant que le signal 3 est à un niveau logique haut. Un décodage de la capacité maximale atteinte par le compteur 5 agit sur la porte logique 6 par l'intermédiaire de la boucle de couplage 11 pour la faire passer à un état logique bas et bloquer le chargement du compteur 5.

Une mémoire vive 7 de capacité identique à celle du compteur-réservoir 5 mémorise l'état final de ce dernier lors de l'apparition d'un signal 12 issu de la logique de chargement 9. Un décompteur préchargeable 13 est relié par ses entrées aux sorties de sa mémoire vive 7, se vide au cadencement du signal 14 fourni par une horloge travaillant à une fréquence $n$F et est continuellement rechargé par un signal 15, issu d'un détecteur d'état 16 du décompteur 13, à la valeur mémorisée dans la mémoire vive 7 lorsque le contenu du décompteur 13 est égal à la valeur zéro. La fréquence de ces impulsions 15 est $n$ fois supérieure à la fréquence du signal d'entrée 1 et réalise l'interpolation du signal 1. En sen reportant à la figure 5, on a représenté aux trois premières lignes respectivement la forme du signal 1 engendré par le capteur de position, la forme du signal à la sortie du compteur-réservoir 5 et la forme du signal sur les sorties du décompteur préchargeable 13. A la ligne 1, les créneaux sont de largeur différente pour simuler le fonctionnement du système avec des dents de largeur différente.

Les impulsions 15 sont comptabilisées dans un compteur-décodeur 17, régulièrement remis à zéro par le signal 10.

La sortie 18 du décodage de l'état $m$, tel que défini précédemment, sert à activer une bascule 19 du type RS, mémorisant ce décodage jusqu'au nouveau signal 10 utilisé pour la remise à zéro de la bascule 19 et du compteur 17. La sortie 20 de la bascule 19 est à l'état logique haut quand la bascule est activée et permet le passage d'une impulsion 8 au travers d'une porte logique ET 21. L'impulsion de référence 22, issue de la porte 21, n'apparaît que lorsque l'on a détecté une période supérieure à la précédente. On doit comprendre que, conformément à la présente invention, on s'intéresse à la période qui sépare deux fronts montants successifs représentés par les flèches apparaisant à la ligne 1 de la figure 5. Il en résulte que les dents de la cible n'ont pas besoin d'être de largeur rigoureusement constante, ce qui est un avantage du présent système. Une période supérieure à la précédente correspond au passage de la partie 44 à la périphérie du disque de la figure 1 sur laquelle plusieurs dents successives ont été supprimées, face au capteur de position. On notera, par ailleurs, que des impulsions parasites 22 peuvent être engendrées dans le cas de fortes décélérations, notamment avant les points morts hauts du cycle d'un moteur à combustion interne dans sa phase de démarrage et que la logique de verrouillage 23 est le moyen prévu pour les éliminer. Le signal de référence 22 est dirigé, d'une part, vers la logique de chargement 9 et vers la logique de verrouillage 23 dont le rôle est de filtrer du signal de référence 22 les impulsions parasites qui pourraient apparaître dans la phase 47 après la phase 45 et de ne laisser passer que les impulsions relatives à la détection d'une absence de dent.

En se reportant à nouveau à la figure 5, on a représenté à la quatrième ligne le signal apparaissant sur le compteur 18 à la sortie du compteur-décodeur 17, à la cinquième ligne le signal 20 sortant de la bascule RS 19, à la sixième ligne le signal 28 apparaissant sur une sortie de la logique de verrouillage 23 portant la même référence, à la septième ligne le signal de référence 22 apparaisant à la sortie de la porte logique 21 à fonction ET, à la huitième ligne la forme du signal 41 apparaissant sur une seconde sortie du compteur-décodeur 17 et reconstituant les dents absentes en 44 à la périphérie de la cible de la figure 1 et à la neuvième ligne le signal recueilli à la sortie d'une porte logique 43 à fonction OU et qui correspond, sous forme d'impulsions, au signal 1 émis par le capteur de position à l'entrée du circuit électronique suivant l'invention avec en plus la reconstitution des deux dents absentes en 44.

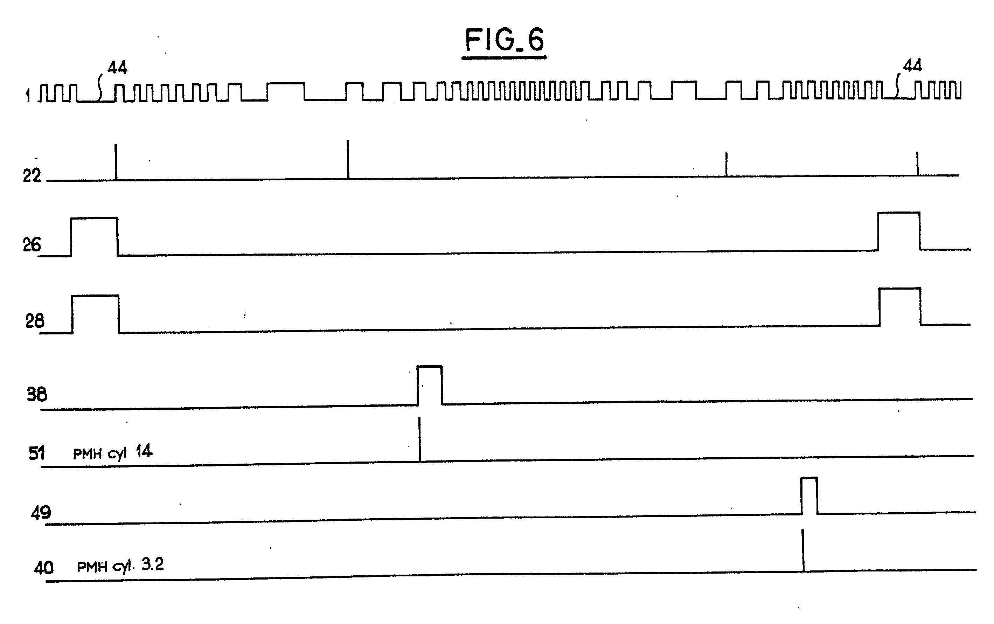

Revenant à la figure 3, le signal de référence 22 relatif à la détection d'une absence de dent 44 donne un signal 24, à la sortie de la logique de verrouillage 23, servant à la remise à zéro d'un compteur 29 incrémenté par un signal 25 qui n'est autre que le signal 3 créé dans la logique de commande 2 et traité par la logique de verrouillage 23. Un détecteur d'état 30 du compteur 29 connecté aux sorties de celui-ci génère, d'une part, un signal 26 informant la logique de verrouillage 23 que le compteur 29 s'est incrémenté autant de fois que le nombre de dents séparant deux absences successives de dents 44, d'autre part, un signal 38 qui est généré après un comptage d'un nombre de dents égal à celui séparant une absence de dent d'un des points caractéristiques du cycle moteur que l'on veut repérer. Ce signal 38 ne peut être utilisé que si le système est verrouillé, c'est-à-dire si le signal 27, issu de la logique de verrouillage 23, est à un état logique haut et traverse une porte logique ET 39 pour donner un signal 40 (figure 6) de largeur calibrée par le signal 8 issu de la logique de commande 2.

La logique de verrouillage 23 crée un signal 28 (figure 6) qui est à l'état logique haut pendant la durée de l'absence de dents et qui permet à un signal 41, issu du décodage des états n, 2n,..., (k—1)n du compteur-décodeur 17 et où k est le nombre de dents absentes, de traverser une porte logique ET 42 et de générer des signaux de dents que l'on aurait obtenus si l'on n'avait pas supprimé de dents à la cible. Ces signaux, issus de 42, sont additionnés dans une porte logique OU 43 avec le signal 8 apparaissant à chaque vraie dent de la cible et fournissent sur la sortie de la porte 43 un signal de la forme illustrée à la dernière ligne de la figure 5.

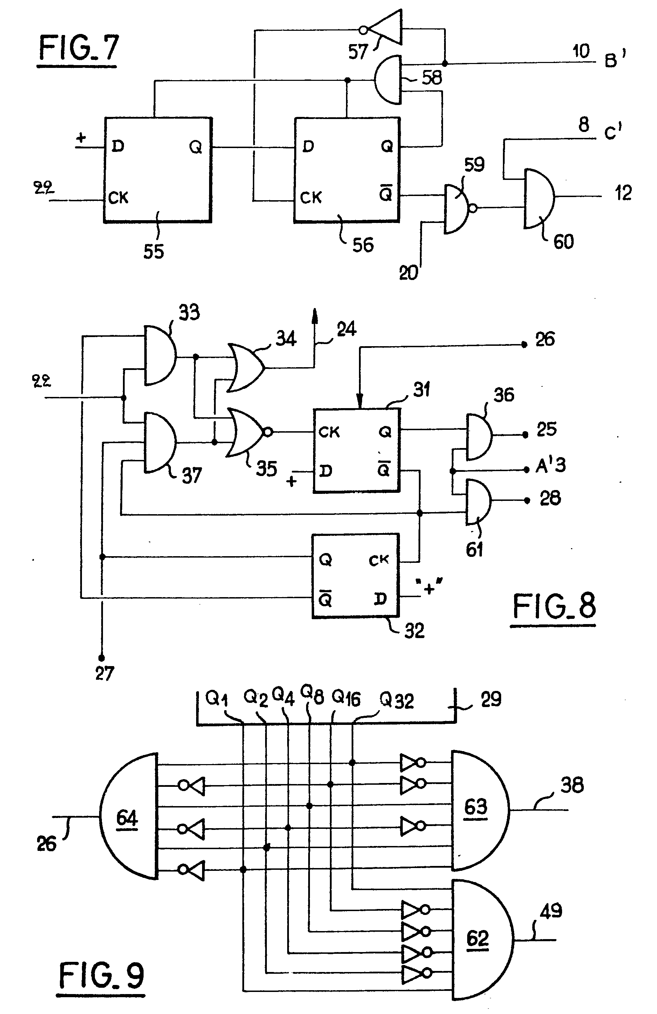

La logique de chargement 9, dont un exemple de réalisation est donné à la figure 7, interdit la mémorisation dans la mémoire vive 7 du résultat présent dans le compteur-réservoir 5 lors du décodage d'une période supérieure à la précédente donné par le signal 22, mais force la mémorisation dans la mémoire vive 7 du résultat présent dans le compteur-réservoir 5 lors de l'apparition de deux impulsions consécutives du signal 22, phénomène pouvant apparaître dans la phase de mise sous tension ou dans la phase 47 suivant la phase 45 (figure 2).

La logique de chargement 9 comprend deux bascules 55 et 57 de type D, la sortie non inverseuse de la première étant reliée à l'entrée de la seconde, un inverseur 57, deux portes logiques 58 et 60 de type ET et une porte logique 59 de type NON-ET. Le signal 10 de remise à zéro, en provenance de la logique de commande 2, est transmis à l'inverseur 57 qui le communique à l'entrée horloge de la bascule 56, d'une part, d'autre part, aux entrées de remise à zéro des bascules 55 et 56 par l'intermédiaire de la porte logique 58 à fonction ET dont la seconde entrée est reliée à la sortie non inverseuse de la bascule 56. La sortie inverseuse de la bascule 56 est reliée à une entrée de la porte logique 59 à fonction NON-ET qui est connectée par sa seconde entrée à la sortie non inverseuse de la bascule 19 de type RS pour recevoir le signal 20. La sortie de la porte logique 59 à fonction NON-ET est reliée à une entrée de la porte logique 60 à fonction ET dont la seconde entrée reçoit le signal 8 de transfert en provenance de la logique de contrôle 2. La sortie de la porte logique 60 à fonction ET est connectée par le conducteur 12 à la mémoire vive 7 de la figure 3 pour déclencher le transfert de l'information stockée dans la mémoire vive 7 à destination du décompteur 13. L'entrée D de la bascule 55 est reliée au plus batterie et l'entrée horloge de ladite bascule 55 est connectée à la sortie de la porte logique 21 à fonction ET pour en recevoir le signal 22.

Les deux bascules 55 et 56 servent à empêcher la mémorisation dans la mémoire vive 7 du contenu du compteur-réservoir 5 après la détection d'une période supérieure à la précédente mais favorisent la mémorisation lors de la détection de deux impulsions consécutives du signal 22.

Das leur état initial, les deux bascules 55 et 56 sont à zéro.

La sortie $\overline{Q}$ de la deuxième 56 étant à un, la sortie Q 20 de la bascule RS 19 bloque les impulsions de transfert 8 lors de la première détection d'une période supérieure à la précédente. A l'appararition d'une impulsion 22, la première bascule 55 passe à un et entraîne le passage à un de la seconde bascule 56 au front descendant du signal R.A.Z. 10 qui libère la remise à zéro des deux bascules 55 et 56 pour le prochain signal 10.

Si une deuxième détection de période supérieure arrive avant le signal de R.A.Z. 10, la sortie Q 20 de la bascule RS 19 passe à un, mais la deuxième bascule 56 étant activée, sa sortie $\overline{Q}$ est à zéro. L'impulsion 8 fournit une impulsion de chargement 12.

En effet, en régime stabilisé, on a besoin d'une bonne précision sur le signal d'interpolation et la mémorisation d'une période présentant une absence de dents fausserait la qualité de cette interpolation; par contre, dans les phases de démarrage, le nombre mémorisé dans la mémoire vive 7 étant quelconque, on pourrait avoir des impulsions 22 à chaque dent; pour éviter cela, on force le chargement dans la mémoire vive 7 d'une période mesurée à l'aide du compteur 5.

La logique de verrouillage 23, dont le rôle est de filtrer les impulsions 22 apparaissant dans la phase 47 suivant la phase 45 et de ne laisser passer que ceux relatifs à la détection d'une absence de dents, est illustrée par la figure 8 donnant une exemple de réalisation. La logique se verrouille automatiquement lorsque le compteur 29 s'est incrémenté d'une valeur égale au nombre de dents séparant deux absences de dents et n'autorise pas de remise à zéro du compteur 29 par le signal 24 si le compteur 29 ne s'est pas incrémenté à la valeur de verrouillage. Elle permet par deux de ses sorties 27 et 28 d'informer la logique extérieure à la logique de verrouillage 23 de l'état ou non de verrouillage et de la position du capteur devant une absence de dents 44.

Dans son état initial, deux bascules 31 et 32 de type D sont au repos et leurs sorties Q sont à un état logique bas. Le signal 22, venant de la porte logique 21, ne peut passer que par une porte logique ET 33 et par une porte logique OU 34 pour générer un signal 24 de remise à zéro du compteur 29. Le signal issu de la porte logique 33 est aussi dirigé vers une porte logique NON-ET 35 dont la sortie est reliée à l'entrée horloge de la bascule D 31, dont la sortie Q passe à l'état logique haut et permet ainsi au signal 3, vennant de la logique de commande 2, de traverser une porte logique ET 36 de façon à générer un signal 25 utilisé comme signal d'horloge par le compteur 29. Le signal 26, apparaissant chaque fois que le compteur 29 s'est incrémenté un nombre de fois égal au nombre de dents séparant deux absences 44 de dents, agit sur la remise à zéro (clear) de la bascule 31 dont la sortie $\overline{Q}$, reliée à la bascule D 32, passe à l'état logique haut et fait basculer la sortie Q de bascule D 32 dans un état logique haut verrouillant ainsi la logique. Tant que la logique n'est pas verrouillée, chaque impulsion 22 issue de la porte logique 21 met à zéro le compteur 29; quand la logique est verrouillée, la sortie $\overline{Q}$ de la bascule 32 est à un état logique bas et bloque la porte logique 33; les impulsions 22 passent maintenant par la porte logique ET 37 seulement si la sortie $\overline{Q}$ de 31 est à l'état logique haut; il ne peut y avoir de remise à zéro du compteur 29 par une impulsion 22 tant qu'il n'y a pas eu de signal 26. Le signal 27, provenant de la sortie Q de la bascule 32, est utilisé, par ailleurs, pour donner l'information de l'état de verrouillage de la logique.

En se reportant à la figure 6, on a représenté à la première ligne le signal émis à l'entrée du dispositif par le capteur de position dans l'hypothèse d'accélérations et de décélérations successives telles que représentées à la figure 2. On remarque en particulier la position 44 des dents manquantes; à la second ligne, on a représenté le signal 22 apparaissant à la sortie de la porte logique 21 à fonction ET; à la troisième ligne, on a représenté le signal 26 sortant du détecteur d'état 30 tandis qu'à la quatrième ligne, on a représenté le signal 28 apparaissant à la sortie de la porte logique 61 à fonction ET de la logique de verrouillage 23 de la figure 8; à la cinquième et à la septième ligne de la figure 6, on a représenté les signaux apparaissant respectivement sur les deux sorties 38 et 49 du détecteur d'état 30 de la figure 3. La sixième ligne de la figure 6 illustre le signal de repérage que l'on recueille sur un conducteur 51 à la sortie d'une porte logique 50 à fonction ET dont une première entrée est connectée à la sortie 38 du détecteur d'état 30 de la figure 3 et dont la seconde entrée est connectée à la sortie d'une porte logique 39 à fonction ET qui reçoit, par ses entrées, respectivement le signal 8 en provenance de la logique de commande 2 et le signal 27 donnant l'état de verrouillage de la logique de verrouillage 23. Ce signal de repérage 51 donne la position dans le cycle du point mort haut correspondant aux cylindres 1 et 4. D'une manière analogue, la ligne huit de la figure 6 illustre le signal de repérage que l'on recueille sur un conducteur 40 à la sortie d'une porte logique 52 à fonction ET dont une première entrée est connectée à la sortie 49 du détecteur d'état 30 de la figure 3 et dont la seconde entrée est connectée à la sortie de la porte logique 39 à fonction ET. Ce signal de repérage 40 donne la position dans le cycle du point mort haut correspondant aux cylindres 3 et 2. Le signal 28, apparaissant à la sortie de la porte logique 61 à fonction ET de la figure 8 et qui est représenté à la ligne quatre de la figure 6, informe sur l'absence de dents 44.

La figure 9 illustre enfin un mode de réalisation du détecteur d'état 30 du décompteur 29 aux sorties $Q_1$, $Q_2$, $Q_4$, $Q_8$, $Q_{16}$ et $Q_{32}$ duquel il est connecté par ses entrées. Le détecteur d'état 30 comporte essentiellement trois portes logiques 62, 63 et 64 à fonction ET regroupant chacune les six entrées du détecteur d'état soit directement, soit par l'intermédiaire d'inverseurs et dont les sorties sont les conducteurs 49, 38 et 26 rencontrés précédemment.

## Revendications

1. Procédé de repérage de la position angulaire d'une pièce animée d'un mouvement de rotation, solidaire d'un disque muni à sa périphérie d'une succession de dents et de creux et duquel on a supprimé au moins une dent pour constituer un repère absolu (44), comportant un capteur de position disposé face à la périphérie du disque pour détecter le défilement des dents et des creux, suivant lequel on réalise une interpolation électronique du signal d'entrée (1) en provenance du capteur de position et on utilise le signal d'interpolation (15) pour engendrer un signal de référence (22) en réponse à la détection du repère absolu (44) par le capteur, caractérisé en ce que l'on place le repère absolu (44) à la périphérie du disque dans une position telle qu'il est détecté par le capteur pendant une phase de variation monotone ou de vitesse constante du disque, on utilise le signal d'interpolation (15) pour comparer des périodes successives définies chacune par le défilement devant le capteur des fronts montants de deux dents consécutives, on engendre ledit signal de référence (22) lorsque le rapport entre deux périodes successives est supérieur à un seuil donné, et on engendre au moins un signal de repérage de position particulière (40, 51) du disque déphasé angulairement d'une valeur donnée par rapport au signal de référence (22), un verrouillage électronique étant effectué sur le signal de référence pour éliminer toute impulsion parasite sur le signal de repérage (40, 51) entre deux détections consécutives du repère absolu (44).

2. Dispositif pour le décodage de la position angulaire d'une pièce animée d'un mouvement de rotation par la mise en application du procédé suivant la revendication 1, comportant des moyens pour réaliser une interpolation électronique du signal d'entrée en provenance du capteur de position, caractérisé en ce qu'il comporte des moyens de comptage (17) du nombre d'impulsions d'interpolation engendrées entre les fronts montants de deux dents consécutives, des moyens de comparaison (19, 21) à un seuil (m) du nombre d'impulsions d'interpolation comptabilisées entre les fronts montants de deux dents consécutives, des moyens de verrouillage (23) pour éliminer toute impulsion parasite sur le signal de repérage entre deux détections consécutives du repère absolu, et des moyens (29, 30, 39, 50, 52) pour engendrer ledit signal de repérage (40, 51) à partir du signal de référence (22) et d'un signal (8) image du signal d'entrée (1) mis en forme.

3. Dispositif pour le décodage de la position angulaire d'une pièce animée d'un mouvement de rotation suivant la revendication 2, dans lequel les moyens pour réaliser une interpolation électronique du signal d'entrée comprennent: un compteur-réservoir (5) accumulent les impulsions (4) fournies par une horloge travaillant à une fréquence F, une mémoire vive (7) connectée par ses entrées aux sorties dudit compteur-réservoir (5) et par ses sorties aux entrées d'un décompteur (13) connecté par ses sorties aux entrées d'un détecteur d'etat (16) relié par une de ses sorties à une entrée de chargement dudit décompteur (13), dans lequel ledit décompteur (13) travaille à une fréquence nF avec *n* entier et positif et se charge à la valeur en mémoire dans la mémoire vive (7) à chaque fois que son contenu atteint une valeur programmée, caractérisé en ce que les moyens de comptage du nombre d'impulsions d'interpolation, entre les fronts montants de deux dents consécutives, comprennent un compteur-décodeur (17) connecté par une entrée à la sortie du détecteur d'état (16) et par une sortie à une bascule (19) du type RS mémorisant un décodage dudit compteur-décodeur (17) jusqu'à sa prochaine remise à zéro.

4. Dispositif pour le décodage de la position angulaire d'une pièce animée d'un mouvement de rotation suivant la revendication 3, caractérisé en ce que les moyens pour réaliser une interpolation électronique du signal d'entrée (1) comprennent, en outre, une logique de commande (2) engendrant, à partir du signal d'entrée (1) en provenance du capteur de position: un signal (3) d'inhibition de l'horloge (4), un signal de transfert (8, 12) pour le chargement de la mémoire vive (7) par l'intermédiaire d'une logique de chargement (9) et un signal de remise à zéro (10) commun au compteur-réservoir (5), au compteur-décodeur (17) et à la bascule (19) de type RS.

5. Dispositif pour le décodage de la position angulaire d'une pièce animée d'un mouvement de rotation suivant l'une quelconque des revendications 2 à 4, caractérisé en ce que les moyens pour engendrer le signal de repérage (40, 51) comprennent un compteur de discontinuités (29) connecté par ses entrées à deux sorties (24, 25) desdits moyens de verrouillage (23) lui fournissant respectivement un signal de remise à zéro (24) et un signal d'incrementation (25), et par ses sorties aux entrées d'un décodeur d'état (30) qui est connecté par une de ses sorties (26) à une entrée des moyens de verrouillage (23) et par au moins une autre sortie (38; 49) à au moins une porte (50; 52) engendrant à sa sortie ledit signal de repérage (51; 40).

6. Dispositif pour le décodage de la position angulaire d'une pièce animée d'un mouvement de rotation suivant les revendications 2 et 5, caractérisé en ce que le moyen de verrouillage (23) comprennent: des moyens (33, 34, 31, 32) favorisant la remise à zéro du compteur de discontinuités (29) lorsque le comptage des dents mécaniques, précédant la remise à zéro dudit compteur, n'a pas donné un nombre égal à celui séparant ordinairement deux discontinuités (44) successives, des moyens (26, 31, 42) pour entrer en action seulement lorsque le comptage des dents mécaniques, séparant deux remises à zéro dudit compteur de discontinuités (29), a au moins une fois été égal à celui séparant ordinairement deux discontinuités successives (44) et lorsque le dispositif de verrouillage est en action, des moyens (28, 42, 43) pour restituer des impulsions (41) correspondant aux dents absentes en vue de piloter d'autres dispositifs associés et des moyens (31, 32, 33, 37) bloquant la remise à zéro du compteur de discontinuités (29) tant que le comptage des dents n'est pas au moins égal à celui séparant ordinairement deux discontinuités (44) successives.

7. Dispositif pour le décodage de la position angulaire d'une pièce animée d'un mouvement de rotation suivant la revendication 6, caractérisé par une porte logique (21) à fonction ET connectée par ses entrées, d'une part, à la sortie de la logique de commande (2) donnant le signal de transfert (8), d'autre part, à la sortie non inverseuse de la bascule (19) de type RS; par sa sortie (22), d'une part, à une entrée de la logique de chargement (9), d'autre part, à une entrée des moyens de verrouillage.

## Claims

1. A method of determining the angular position of a rotating element, integral with a disc provided at its periphery with a succession of teeth and slots where at least one tooth has been omitted to provide an absolute mark (44), comprising a position detector arranged opposite to the periphery of the disc to detect the passage of the teeth and slots, comprising electronically interpolating the input signal (1), issuing from the position detector and using the interpolation signal (15) for producing a reference signal (22) in response to the detection of the absolute mark (44) by the detector, characterized by the steps of bringing the absolute mark (44) at the periphery of the disc in such a position that it is detected by the detector during a phase of monotonous variation or constant speed of the disc; using the interpolation signal (15) for comparing successive periods defined each by the passage of the ascending frontal surfaces of two successive teeth in front of the detector, generating said reference signal (22) when the ratio between two successive periods is above a given threshold; and generating at least one marking signal of a special position (40, 51) of the disc, phase-shifted angularly by a given value with respect to the reference signal (22), while effecting electronic locking of the reference signal to eliminate any parasitic impulse based upon the marking signal (40, 51) between two consecutive detections of the absolute mark (44).

2. A device for decoding the angular position of a rotating element by the process according to claim 1, comprising means for electronically interpolating the input signal, issuing from the position detector, characterized in that it comprises means (17) for counting the number of interpolation pulses generated between the ascending frontal surfaces of two successive teeth, means (19, 21) for comparing to a threshold (m) the number of interpolation pulses taken into account between the ascending frontal surfaces of two successive teeth, locking means (23) for eliminating any parasitic impulse on the marking signal between two consecutive detections of the absolute mark, and means (29, 30, 39, 50, 52) for producing said marking signal (40, 51) from the reference signal (22) and from a signal (8) image of the shaped input signal (1).

3. A device according to Claim 2, for decoding the angular position of a rotating element, wherein the means for electronically interpolating the input signal comprise; a counting and storing device (5) accumulating the pulses (4) supplied by a clock operating at frequency F, a live memory (7) connected by its inputs to the outputs of said counting and storing device (5) and by its outputs to the inputs of a deductor (13), connected by its outputs to the inputs of a state detector (16), connected by one of its outputs to a loading input of said deductor (13), wherein said deductor (13) operates at a frequency nF, with n being an integer and positive, and is charged with the memory value in the live memory (7) each time its content reaches a programmed value, characterized in that the means for counting the number of interpolation pulses between the ascending frontal surfaces of two successive teeth comprise a counting and decoding device (17), connected by one input to the output of the state detector (16) and by one output to a flip-flop (19) of the RS type which stores a decoding result of said counting and decoding device (17) until its next return to zero.

4. A device according to claim 3, for decoding the angular position of a rotating element, characterized in that the means for electronically interpolating the input signal (1) further comprise, a logic control circuit (2) producing, from the input signal (1) issuing from the position detector, an inhibiting signal for the clock (4), a transfer signal (8, 12) for loading live memory (7) through a logical loading circuit (9) and a reset signal (10), common to the counting and storing device (5), to the counting and decoding device (17) and to the RS type flip-flop (19).

5. A device according to any one of claims 2 to 4, for decoding the angular position of a rotating element, characterized in that the means for producing the marking signal (40, 51) comprise a discontinuity counter (29) connected by its inputs to two outputs (24, 25) of said locking means (23) supplying to it, respectively, a reset signal (24) and an incrementation signal (25), and by its outputs to the inputs of a state decoder (30) which is connected by one of its outputs (26) to an input of the locking means (23) and by at least one other output (38, 49) to at least one gate (50, 52) which produces at its output said marking signal (51, 40).

6. A device according to claims 2 and 5, for decoding the angular position of a rotating element, characterized in that the locking means (23) comprise: means (33, 34, 31, 32) assisting the reset of the discontinuity counter (29) when the counting of mechanical teeth, preceding the reset of said counter, has not resulted in a number which equals the one normally separating two successive discontinuities (44), means (26, 31, 42) working only when the counting of the mechanical teeth, separating two resets of said discontinuity counter (29), has been at least once equal to the one normally separating two successive discontinuities (44) and when the locking device is in operation, means (28, 42, 43) for backing over the pulses (41) corresponding to the omitted teeth with a view to controlling other associated devices and means (31, 32, 33, 37) which block the reset of the discontinuity counter (29) as long as the counting of teeth is not at least equal to the one normally separating two successive discontinuities (44).

7. A device according to claim 6, for decoding the angular position of a rotating element, characterized by a logic AND gate (21) connected by its inputs, on the one hand, to the output of the logic control circuit (2) providing the transfer signal (8), and, on the other hand, to the non-inverting output of the RS type flip-flop (19), said AND gate being also connected by its output (22), on the one hand, to an input of the logical loading circuit (9), and, on the other hand, to an input of the locking means.

**Patentansprüche**

1. Verfahren zur Messung der Winkelstellung eines in Drehung versetzten Teils, das mit einer Scheibe fest verbunden ist, welche an ihrem Umfang mit einer Folge von Zähnen und Aussparungen versehen ist und wobei wenigstens ein Zahn fehlt um so eine absolute Markierung (44) zu bilden, aufweisend einen Stellungsfühler gegenüber dem Scheibenumfang zur Erfassung des Vorbeilaufs der Zähne und Aussparungen mit demgemäßer elektronischer Interpolation des vom Stellungsfühler stammenden Eingangssignals (1) wobei dieses Interpolationssignal (15) zur Erzeugung eines Referenzsignals (22) verwendet wird als Antwort auf die Feststellung der absoluten Markierung (44) durch den Fühler, dadurch gekennzeichnet, daß die absolute Markierung (44) am Scheibenumfang an einer derartigen Stelle angebracht wird, daß sie während einer Phase gleichförmiger Variation oder konstanter Scheibengeschwindigkeit vom Fühler festgestellt wird, daß das Interpolationssignal (15) verwendet wird um jeweils durch den Vorbeilauf der Anstiegsflanken von zwei aufeinanderfolgenden Zähnen vor dem Stellungsfühler definierte aufeinanderfolgende Perioden zu vergleichen, daß das Referenzsignal (22) erzeugt wird, wenn das Verhältnis zwischen zwei aufeinander folgenden Perioden größer als ein vorgegebener Schwellwert ist und daß wenigstens ein Markierungssignal (40, 51) für eine bestimmte Stellung der winkelmäßig um einen vorgegebenen Wert phasenverschobenen Scheibe bezüglich des Referenzsignals (22) erzeugt wird, wobei eine elektronische Verriegelung des Referenzsignals erfolgt um das Auftreten jedes Störimpulses am Markierungssignal (40, 51) zwischen zwei aufeinanderfolgenden Messungen der absoluten Markierung (44) zu unterbinden.

2. Vorrichtung zur Dekodierung der Winkelstellung eines in Drehung versetzten Teils zur Anwendung des Verfahrens nach Anspruch 1, mit einer Anordnung zur elektronischen Interpolation des vom Stellungsfühler Stammenden Eingangssignals, dadurch gekennzeichnet, daß sie eine Zähleranordnung (17) aufweist, für die Anzahl der zwischen den Anstiegsflanken von zwei aufeinanderfolgenden Zähnen erzeugten Interpolationsimpulse, Vergleichsanordnungen (19, 20) zum Vergleichen der Anzahl der zwischen den Anstiegsflanken von zwei aufeinanderfolgenden Zähnen gezählten Interpolationsimpulse mit einem Schwellwert (m), Verriegelungsanordnungen (23) zur Ausschaltung eines jeglichen Störimpulses am Markierungssignal zwischen zwei aufeinanderfolgenden Erfassungen der absoluten Markierung und Anordnungen (29, 30, 39, 50, 52) um das Markierungssignal (40, 51) zu erzeugen, ausgehend vom Referenzsignal (22) und einem Bildsignal (8) des geformten Eingangssignals (1).

3. Vorrichtung zur Dekodierung des Winkelstellung eines in Drehung versetzten Teils nach Anspruch 2, wobei die Anordnungen zur elektronischen Interpolation des Eingangssignals folgende Bauteile aufweisen: einen Speicherzähler (5) zum Aufsummieren der Impulse (4), die von einer mit der Frequenz (F) laufenden Uhr Stammen, einen Schnellspeicher (7), dessen Eingänge mit den Ausgängen des Speicherzählers (5) verbunden sind und dessen Ausgänge mit den Eingängen eines Abwärtszählers (13) verbunden sind, wobei dessen Ausgänge mit den Eingängen eines Zustandszählers (16) verbunden sind, der über einen seiner Ausgänge mit dem Ladeeingang des Abwärtszählers (13) verbunden ist, wobei der Abwärtszähler (13) mit einer Frequenz (nF) arbeitet mit n ganzzahlig und positiv und sich auf den im schnellen Speicher (7) gespeicherten Wert jedesmal dann auflädt, wenn sein Inhalt einen programmierten Wert erreicht, dadurch gekennzeichnet, daß die Zähleranordnung für die Anzahl der Interpolationsimpulse zwischen den Anstiegsflanken von zwei aufeinanderfolgenden Zähnen einen Dekodierzähler (17) aufweisen, dessen einer Eingang mit dem Ausgang des Zustandszählers (16) verbunden ist und der über einen Ausgang mit einem RS-Flip-Flop (19) verbunden ist, welcher eine Dekodierung des Dekodierzählers (17) bis zu seiner nächsten Null-Setzung speichert.

4. Vorrichtung zur Dekodierung der Winkelstellung eines in Drehung versetzten Teils nach Anspruch 3, dadurch gekennzeichnet, daß die Anordnung zur Verwirklichung einer elektrischen Interpolation des Eingangssignals (1) außerdem eine logische Steuerschaltung (2) aufweist, die, ausgehend vom Eingangssignal (1), das vom Stellungsfühler stammt, Folgendes erzeugt: ein Steuersignal (3) für die Uhr (4), ein Übertragungssignal (8, 12) zum Laden des schnellen Speichers (7) mittels einer Ladeschaltung (9) und ein Nullsetzungssignal (10), das dem Speicherzähler (5), dem Dekodierzähler (17) und dem RS-Flip-Flop (19) gemeinsam ist.

5. Vorrichtung zur Dekodierung der Winkelstellung eines in Drehung versetzten Teils nach einem der Ansprüche 2 bis 4, dadurch gekennzeichnet, daß die Anordnung zur Erzeugung des Markierungssignals (40, 51) einen Diskontinuitätenzähler (29) aufweist, dessen Eingänge mit zwei Ausgängen (24, 25) der Verriegelungsanordnung (23) verbunden sind, die ihr sowohl ein Nullsetzungssignal (24) als auch eine Zuwachsignal (25) zuführen, und dessen Ausgänge mit den Eingängen eines Zustandsdekodierers (30) verbunden sind, der über einen seiner Ausgänge (26) mit einem Eingang der Verreigelungsanordnung (23) verbunden ist, und über wenigstens einen anderen Ausgang (38, 49) mit wenigstens einer Torschaltung (50, 52) verbunden ist, die an ihrem Ausgang das Markierungssignal (51, 40) erzeugt.

6. Vorrichtung zur Dekodierung der Winkelstellung eines in Drehung versetzten Teils nach Ansprüchen 2 bis 5, dadurch gekennzeichnet, daß die Verriegelungsanordnung (23) folgende Bauteile aufweist: Mittel (23, 34, 31, 32), die das Nullsetzen des Diskontinuitätenzählers (29). begünstigen, wenn das Zählen der mechanischen Zähne, das dem Nullsetzen dieses Zählers vorgeht, nicht zu einer Zahl führt, die gleich derjenigen ist, welche üblicherweise zwei aufeinanderfolgende Diskontinuitäten (44) trennt, Mittel (26, 31, 42) um nur dann in Aktion zu treten, wenn das Zählen der mechanischen Zähne, die zwei Nullsetzungen des Diskontinuitätenzählers (29) trennt, wenigstens einmal gleich derjenigen gewesen ist, die üblicherweise zwei aufeinanderfolgende Diskontinuitäten (44) trennt und, wenn die Verriegelungsanordnung tätig ist, Mittel (28, 42, 43) um Impulse (41) wieder herzustellen, die den fehlenden Zähnen entsprechen um andere zugeordnete Anordnungen zu steuern, sowie Mittel (31, 32, 33, 37), die das Nullsetzen des Diskontinuitätenzählers (29) verhindert, so lange die Zählung der Zähne nicht wenigstens gleich derjenigen ist, welche üblicherweise zwei aufeinanderfolgende Diskontinuitäten trennt.

7. Vorrichtung zur Dekodierung der Winkelstellung eines in Drehung versetzten Teils nach Anspruch 6, gekennzeichnet durch ein logisches UND-Tor (21), dessen Eingänge einerseits mit dem Ausgang der logischen Steuerschaltung (2) verbunden sind, die das Übertragungssignal (8) liefert und andererseits mit dem nicht invertierenden Ausgang des RS-Flip-Flops (19) verbunden ist und dessen Ausgang (22) einerseits mit einem Eingang der logischen Ladeschaltung (9) und andererseits mit einem Eingang der Verriegelungsanordnung verbunden ist.

FIG_1
44
FIG_2
V
46
47
P.M
P.M
P.M.
45
t

F
4
6
11
1
2
3
10
8
5
9
12
7
22
21
13
nF
14
15
20
Q
R
S
17
16
19
18
15
nSd
41
42
43
Sd
28
23
24
25
29
30
26
38
49
51
27
50
39
52
40

FIG. 3

4a
1
4b
3
4c
10
4d
8
1
44
5
13
18
20
m
28
22
41
43

FIG_4

FIG_5

44
44
1
22
26
28
38
51
PMH cyl 14
49
40
PMH cyl. 3.2

FIG_6

FIG_7
+
D
Q
22
CK
55
D
Q
CK
Q̄
56
57
58
10
B'
8
C'
59
60
12
20
33
34
24
26
22
31
CK
Q
36
25
A'3
28
37
35
+
D
Q̄
61
Q
CK
Q̄
D
"+"
32
FIG_8
27
Q1
Q2
Q4
Q8
Q16
Q32
29
64
26
63
38
62
49
FIG_9